# EUROPÄISCHE PATENTSCHRIFT

(11) **EP 3 487 022 B1**
(45) Veröffentlichungstag und Bekanntmachung des Hinweises auf die Patenterteilung: **27.05.2020**
(21) Anmeldenummer: 18205926.1
(22) Anmeldetag: 13.11.2018
(51) Int. Cl.: H02H 3/08, H02H 3/02, H02H 7/26, H02H 7/22, H02H 3/093, H02H 3/087, H02J 1/06, H02J 1/10

(54) **SCHUTZVORRICHTUNG MIT PARALLELEN STROMPFADEN IN DENEN JEWEILS EIN SCHUTZSCHALTER ANGEORDNET IST SOWIE VERFAHREN ZUM BETRIEB EINER SOLCHEN SCHUTZVORRICHTUNG**
PROTECTIVE DEVICE WITH PARALLEL CURRENT PATHS EACH INCLUDING A PROTECTIVE SWITCH AND METHOD FOR OPERATING SAME
DISPOSITIF DE PROTECTION AVEC TRAJETS DE COURANT PARALLELS AINSI QUE PROCÉDÉ DE FONCTIONNEMENT D'UN TEL DISPOSITIF DE PROTECTION

(30) Priorität: 20.11.2017 DE 102017220711
(43) Veröffentlichungstag der Anmeldung: 22.05.2019
(73) Patentinhaber: Ellenberger & Poensgen GmbH, 90518 Altdorf (DE)
(72) Erfinder: BRANDL, Wilhelm, 90518 Altdorf (DE); HÄRTEIS, Michael, 92367 Pilsach (DE)
(74) Vertreter: FDST Patentanwälte

(56) Entgegenhaltungen:
- AT-A4- 507 083

## Beschreibung

Die Erfindung betrifft eine Schutzvorrichtung mit einem Gesamtstrompfad zwischen einem Spannungseingang und einem Lastanschluss. Ferner betrifft die Erfindung ein Verfahren zum Betrieb einer solchen Schutzvorrichtung.

Zum Schalten einer Last, insbesondere in einem Gleichspannungsnetz, wird beispielsweise ein elektronischer Schutzschalter verwendet. Mittels dieses elektronischen Schutzschalters sind eine Beschädigung der Last aufgrund eines Störfalles, wie beispielsweise einer Überlast oder eines Kurzschlusses, sowie eine Beschädigung weiterer Komponenten, insbesondere des Gleichspannungsnetzes, aufgrund eines durch eine Beschädigung der Last hervorgerufenen Störfalles mittels einer aktiven, insbesondere elektronisch gesteuerten, Strombegrenzung vermieden. Zudem sind insbesondere im Kurzschlussfall aufgrund der Strombegrenzung ein vergleichsweise hoher Kurzschlussstrom sowie ein damit einhergehender Spannungseinbruch der Strom -bzw. Spannungsquelle mittels des elektronischen Schutzschalters verringert bzw. vermieden.

Ein solcher elektronischer Schutzschalter weist hierzu beispielsweise einen zwischen einem Spannungseingang und einem Lastanschluss verlaufenden Strompfad auf, in welchen ein Stromsensor sowie ein Schaltelement geschaltet sind. Des Weiteren weist der elektronische Schutzschalter insbesondere eine Steuereinheit auf, welcher zur strombegrenzenden bzw. stromsperrenden Ansteuerung des Schaltelements ein vom Stromsensor erfasster Messwert zugeführt ist. Das Schaltelement ist dabei beispielsweise als ein Halbleiterschalter, insbesondere als ein MOSFET (Metall-Oxid-Halbleiter-Feldeffekttransistor), ausgeführt. Beispielsweise ist in der EP 1 186 086 B1 ein Stromverteilungssystem mit einer Anzahl an Stromkreisen mit jeweils einem elektronischen Schutzschalter als Kurzschluss- und/oder Überlastschutz offenbart, wobei die Stromkreise gemeinsam mittels eines getakteten Netzteils gespeist sind. Im Überlastfall erfolgt bei Überschreiten einer einstellbaren Stromgrenze durch den Laststrom, beispielsweise beim 1,1-Fachen des Nennstroms der Last, eine Sperrung des elektronischen Schutzschalters nach Ablauf einer Verzögerungszeit, während im Kurzschlussfall zunächst eine Strombegrenzung und nach Überschreiten einer weiteren Stromschwelle, beispielsweise beim 2-fachen des Nennstroms der Last, eine Sperrung des Schutzschalters nach Ablauf einer bestimmten Abschaltzeit erfolgt.

Derartige elektronische Schutzschalter, insbesondere für die Anwendung in einem Gleichspannungsnetz, weisen beispielsweise eine Nennstromstärke im Bereich von 0A bis 24A auf. Sollen allerdings Lasten mit einer höheren Nennstromstärke betrieben werden, müssen beispielsweise andere Arten von Schutzschaltern, wie thermische oder magnetische Schutzschalter verwendet werden, welche allerdings im Vergleich zu elektronischen Schutzschaltern vergleichsweise wenige Einstellmöglichkeiten, beispielsweise bezüglich deren Abschaltzeit aufweisen. Bei der Verwendung eines Schutzschalters einer dieser Arten, müsste dann beispielsweise zusätzlich ein Lastanschluss des Stromverteilungssystems an den anderen elektronischen Schutzschalter angepasst werden.

Eine elektronische Schutzvorrichtung nach dem Oberbegriff von Anspruch 1 ist der Entgegenhaltung AT507083 entnehmbar. Der Erfindung liegt die Aufgabe zugrunde, eine geeignete Schutzvorrichtung anzugeben, mittels welcher eine Last mit vergleichsweise hohem Nennstrom gegen eine Überlast und/oder einen Kurzschluss geschützt ist. Des Weiteren soll ein geeignetes Verfahren zum Betrieb einer solchen Schutzvorrichtung angegeben werden, insbesondere während eines Ein- oder Abschaltvorgangs der Schutzvorrichtung.

Bezüglich der Schutzvorrichtung wird die Aufgabe erfindungsgemäß gelöst durch die Merkmale des Anspruchs 1. Hinsichtlich des Verfahrens wird die Aufgabe gelöst durch die Merkmale des Anspruchs 6. Vorteilhafte Ausgestaltungen und Weiterbildungen sind Gegenstand der Unteransprüche. Dabei gelten die Ausführungen im Zusammenhang mit der Schutzvorrichtung sinngemäß auch für das Verfahren und umgekehrt.

Hierzu weist die Schutzvorrichtung einen Gesamtstrompfad zwischen einem Spannungseingang und einem Lastanschluss auf, wobei der Gesamtstrompfad eine Anzahl an parallel geschalteten Teilstrompfaden umfasst. In jedem der Teilstrompfade ist dabei ein elektronischer Schutzschalter mit einem Schaltelement und mit einer Steuereinheit zur aktiven Strombegrenzung eines im entsprechenden Teilstrompfad fließenden Teilstroms sowie zum Einschalten und Abschalten eines Lastausgangs des elektronischen Schutzschalters geschaltet. Die elektronischen Schutzschalter sind dabei beispielsweise einpolig oder alternativ mehrpolig ausgebildet.

Unter einer "aktiven" Strombegrenzung wird hierbei verstanden, dass diese vorteilhafterweise einstellbar, d.h. regel- oder steuerbar ist. Insbesondere ist hierzu die Steuereinheit, welche beispielsweise als ein Mikrokontroller oder als ein Mikroprozessor ausgebildet ist, an einen Steuereingang des Schaltelements angeschlossen. Beispielsweise ist dabei die Steuereinheit direkt an den Steuereingang des Schaltelements angeschlossen. Alternativ ist zwischen der Steuereinheit und dem Steuereingang des Schaltelements eine weitere Schaltung, beispielsweise eine Analogschaltung, geschaltet, d.h. die Steuereinheit ist indirekt (mittelbar) an den Steuereingang des Schaltelements angeschlossen. Das Schaltelement weist vorzugsweise einen variablen elektronischen Widerstand auf, welcher mittels der Steuereinheit eingestellt ist bzw. wird. Beispielsweise ist das Schaltelement hierzu als ein Halbleiterschalter ausgebildet.

Zudem sind mittels der Steuereinheit ein, zwei oder mehrere Schwellenwerte (Stromschwellen) einstellbar. Beispielsweise wird auf diese Weise im Störfall bzw. bei Überschreiten eines solchen Schwellenwertes durch die Stromstärke des zugeordneten Teilstroms, wie beispielsweise im Bereich des 1,05-fachen bis 1,2-fachen der Nennstromstärke des elektronischen Schutzschalters, der Lastausgang des entsprechenden elektronischen Schutzschalters nach Ablauf einer Abschaltzeit oder eines Zeitglieds abgeschaltet, wobei vorzugsweise bis zum Abschalten die Stromstärke des Teilstroms mittels des elektronischen Schutzschalters begrenzt wird (Strombegrenzungszeit). Insbesondere ist diese Abschaltzeit in Abhängigkeit der Stromstärke des Teilstroms und/oder des entsprechend überschrittenen Schwellenwertes einstellbar.

Ein Einschalten bzw. Abschalten des Lastausgangs eines elektronischen Schutzschalters bedeutet hier, dass dessen Schaltelement (strom-)leitend, insbesondere vollständig aufgesteuert, bzw. (strom-)sperrend geschaltet ist. Das Einschalten der Schutzvorrichtung bzw. des Lastanschlusses ist hier entsprechend als das Einschalten der Lastausgänge aller elektronischen Schutzschalter zu verstehen. Das Abschalten der Schutzvorrichtung bzw. des Lastanschlusses ist analog das Abschalten der Lastausgänge aller elektronischen Schutzschalter. Mit Ausnahme eines Störfalls ist das Abschalten und Einschalten der Schutzvorrichtung hierbei als ein betriebsgemäß vorgesehenes Abschalten bzw. Einschalten zu verstehen.

Aufgrund der Parallelschaltung der elektronischen Schutzschalter ist ein zwischen dem Spannungseingang und dem Lastanschluss fließender Laststrom (Gesamtstrom) entsprechend dem ersten Kirchhoffschen Gesetz (Knotenregel) in durch die Teilstrompfade fließende Teilströme aufgeteilt. Die Stromstärke des Laststroms ist also die Summe der Stromstärken der Teilströme, wobei die einzelnen Teilströme mittels der jeweils zugeordneten elektronischen Schutzschalter, insbesondere auf die Nennstromstärken der elektronischen Schutzschalter, begrenzt bzw. begrenzbar sind. Mittels der Schutzvorrichtung ist es somit besonders vorteilhaft ermöglicht, eine Last mit einer Nennstromstärke zu betreiben, welche höher ist als die Nennstromstärke eines einzelnen elektronischen Schutzschalters.

Vorzugsweise weisen alle elektronischen Schutzschalter dabei jeweils die gleiche Nennstromstärke auf. Besonders vorteilhaft ist auf diese Weise mittels der Schutzvorrichtung eine Last mit einer Nennstromstärke mit einem, der Anzahl der Teilstrompfade entsprechenden, Vielfachen der Nennstromstärke eines einzelnen elektronischen Schutzschalters abgesichert, d.h. bei einem Störfall vor einer Beschädigung geschützt.

Insbesondere ist hier im Vergleich zu einer Parallelschaltung thermischer oder magnetischer Schutzschalter, welche beispielsweise ein sog. Derating von 20% aufweisen, d.h. ein Herabsetzen der Gesamt-Nennstromstärke der parallel geschalteten thermischen oder magnetischen Schutzschalter, vorteilhafterweise kein Derating oder lediglich ein vergleichsweise geringes Derating notwendig. Mittels der Verwendung mehrerer baugleicher elektronischer Schutzschalter ist es in oben dargelegter Weise ermöglicht, eine Schutzvorrichtung mit einer Nennstromstärke bereitzustellen, die gewünschten Anforderungen entspricht, so dass vorteilhaft eine hohe Flexibilität beim Bereitstellen der Schutzvorrichtung gegeben ist. Hierzu werden insbesondere bereits zum Verkauf bereitgestellte, also bereits fertig entwickelte, elektronische Schutzschalter genutzt, weshalb Produktions- und/oder Entwicklungskosten verringert sind. Ferner ist auf diese Weise die Schutzvorrichtung zusammen mit einem bereits vorhandenen Stromverteilungssystem nutzbar, wobei eine Anpassung des Stromverteilungssystems, beispielsweise dessen Lastanschlusses, an die Schutzvorrichtung nicht notwendig ist.

Zur Ansteuerung der Schaltelemente der elektronischen Schutzschalter sind den Steuereinheiten Steuersignale zugeführt, welche insbesondere von jeweils zumindest einem der anderen elektronischen Schutzschalter ausgegeben werden. Hierzu weisen die elektronischen Schutzschalter jeweils eine Kommunikationsvorrichtung auf, welche dem Zwecke der Ausgabe und des Empfangs des Steuereingangs dient. Dabei ist die Kommunikationsvorrichtung eines elektronischen Schutzschalters jeweils mit den Kommunikationsvorrichtungen der anderen elektronischen Schutzschalter vorzugsweise direkt, d.h. unmittelbar gekoppelt.

Dabei sind die Kommunikationsvorrichtungen derart miteinander gekoppelt, dass das von einer der Kommunikationsvorrichtungen ausgegebene Steuersignal parallel an die jeweils anderen Kommunikationsvorrichtungen ausgegeben ist bzw. wird. Besonders bevorzug wird das Steuersignal direkt, mit anderen Worten unmittelbar an die anderen Kommunikationsvorrichtungen ausgegeben. So sind insbesondere keine weiteren Schaltungen und/oder Vorrichtungen zwischen den Kommunikationsvorrichtungen geschaltet.

Insbesondere erfolgt die Ausgabe des Steuersignals von einer der Kommunikationsvorrichtung an alle anderen Kommunikationsvorrichtungen gleichzeitig. Insbesondere erfolgt auf diese Weise das Abschalten der anderen elektronischen Schutzschalter im Vergleich zu einer seriellen Weitergabe des Steuersignals, also der Ausgabe des Steuersignals von einer der Kommunikationsvorrichtung an eine der anderen Kommunikationsvorrichtungen, welche das Steuersignal anschließend wiederum an eine weitere der Kommunikationsvorrichtungen ausgibt, beispielsweise durch eine Schaltung nach Art einer sog. "Daisy chain", vergleichsweise schnell, und ein Verschaltungsaufwand ist vergleichsweise gering. Ebenfalls ist aufgrund der Ausgabe des Signals von einer Kommunikationsvorrichtung des elektronischen Schutzschalters direkt an die Kommunikationsvorrichtungen aller anderen Schutzschalter ein übergeordnetes Steuergerät zur Ausgabe des Steuersignals nicht notwendig.

So ist vorteilhaft mittels der Kommunikationsvorrichtung bei einem Einschalten und bei einem Abschalten der Schutzvorrichtung ein gekoppeltes (zeitlich korreliertes) Einschalten bzw. Abschalten der Lastausgänge aller elektronischen Schutzschalter ermöglicht. Ohne diese Kopplung sind beim Einschalten ein fehlerhaftes Verhalten der Schutzvorrichtung und beim Abschalten eine unkorrekte Erkennung bzw. Anzeige des Betriebszustands der elektronischen Schutzschalter möglich, wie im Folgenden dargelegt ist.

Beim Einschalten der Schutzvorrichtung ist insbesondere ein exakt gleichzeitiges Einschalten der Lastausgänge aller elektrischen Schutzschalter nicht gegeben. Mit anderen Worten erfolgt das Einschalten der Lastausgänge der einzelnen elektronischen Schutzschalter zeitlich nacheinander. Wird dabei ein Lastausgang eines ersten elektronischen Schutzschalters eingeschaltet, fließt zunächst der gesamte Laststrom durch den zugeordneten Teilstrompfad, so dass die Stromstärke des zugeordneten Teilstroms einen Schwellenwert, beispielsweise das 1,05-fache der Nennstromstärke dieses elektronischen Schutzschalters, überschreitet. Sofern vor Ablauf der Abschaltzeit dieses ersten elektronischen Schutzschalters, also vor derjenigen Zeitdauer, nach welcher ein Lastausgang eines elektronischen Schutzschalters bei Überschreiten eines Schwellenwertes abschaltet (auslöst), die Lastausgänge der anderen elektronischen Schutzschalter nicht eingeschaltet werden, wird der Laststrom nicht auf die anderen Teilstrompfade aufgeteilt. Folglich bleibt der Teilstrom über dem Schwellenwertes und der Lastausgang des ersten elektronischen Schutzschalters wird abgeschaltet. Ferner ist dieser Teilstrompfad stromsperrend geschaltet, so dass der Laststrom nach Einschalten der Lastausgänge der anderen elektronischen Schutzschalter auf die entsprechenden Teilstrompfade aufgeteilt wird, wobei diese Teilströme aufgrund des gesperrten ersten Teilstrompfades entsprechend dem ersten Kirchhoffschen Gesetz größer sind als wenn alle elektronischen Schutzschalter eingeschaltet sind. Beispielsweise wird derart der Schwellenwert aller anderen elektronischen Schutzschalter überschritten, so dass die Lastausgänge dieser abgeschaltet werden. Zusammenfassend wird die Schutzvorrichtung hier nicht eingeschaltet.

Im Gegensatz dazu ermöglicht die Kopplung der elektronischen Schutzschalter mittels der Kommunikationsvorrichtung einen Austausch von Steuersignalen, so dass vor dem Abschalten des Lastausgangs des zunächst eingeschalteten elektronischen Schutzschalters die Lastausgänge der anderen elektronischen Schutzschalter ebenfalls eingeschaltet werden.

Beispielsweise wird beim Abschalten der Schutzvorrichtung zunächst ein Lastausgang eines ersten elektronischen Schutzschalters abgeschaltet, so dass der Laststrom auf die Teilstrompfade der anderen elektronischen Schutzschalter aufgeteilt wird, weshalb die Stromstärken der Teilströme dort erhöht sind. Ohne Kommunikationsvorrichtung werden dann beispielsweise die Lastausgänge der anderen elektronischen Schutzschalter aufgrund eines erkannten Überstroms abgeschaltet (ausgelöst), weshalb deren Betriebszustand dann inkorrekt als Abschalten aufgrund eines Überstroms anstatt aufgrund eines (gewollten) vorgesehenen Abschaltens der Schutzvorrichtung erkannt und beispielsweise folglich einem Benutzer inkorrekt dargestellt wird. Zusammenfassend wird ohne Kopplung zwar die Schutzvorrichtung, wie vorgesehen, abgeschaltet, jedoch ist der Betriebszustand der elektronischen Schutzschalter inkorrekt dargestellt. Im Gegensatz dazu wird bei einer Schutzvorrichtung mit Kopplung mittels der Kommunikationsvorrichtung ein Steuersignal, welches insbesondere als ein Abschaltsignal ausgebildet ist, vom ersten elektronischen Schutzschalter an die anderen elektronischen Schutzschalter ausgegeben, so dass diese aufgrund des Steuersignals an Stelle des erkannten Überstroms abgeschaltet werden.

Gemäß einer zweckmäßigen Weiterbildung weisen die Kommunikationsvorrichtungen der elektronischen Schutzschalter jeweils eine Schalteinheit auf. Diese ist als Halbleiterschalter, beispielsweise ein Bipolartransistor, zweckmäßigerweise als ein npn-Transistor ausgebildet. Deren Steuereingang (deren Basis) ist dabei mit einem Ausgang der zugeordneten Steuereinheit verbunden. Auf diese Weise ist die Schalteinheit, insbesondere deren Schalterstellung, mittels der Steuereinheit steuerbar.

Die Schalteinheiten weisen jeweils einen ersten Anschluss auf, welcher mit einer Spannungsquelle der Kommunikationsvorrichtung zum Bereitstellen einer Referenzspannung am jeweiligen ersten Anschluss elektrisch verbunden ist. Des Weiteren weisen die Schalteinheiten jeweils einen einen zweiten Anschluss auf, an welchem ein Bezugspotential, insbesondere Masse bzw. Ground, anliegt.

Zudem sind die ersten Anschlüsse aller Schalteinheiten miteinander elektrisch verbunden. Insbesondere sind hierbei keine weiteren Schaltungen und/oder Vorrichtungen zwischen den ersten Anschlüssen vorgesehen. Die elektrische Verbindung der ersten Anschlüsse ist also vorzugsweise direkt (unmittelbar). Dabei ist jeweils der erste Anschluss der Schalteinheit mit einem Eingang der zugeordneten Steuereinheit verbunden, so dass das von der Kommunikationsvorrichtung empfangene Steuersignal an die Steuereinheit weitergeleitet werden kann.

Das von der Kommunikationsvorrichtung ausgegebene Steuersignal ist dabei von der Schalterstellung der Schalteinheit bestimmt: Sind die Schalteinheiten stromsperrend geschaltet (geöffnete Schalterstellung) liegt an allen ersten Anschlüssen die mittels der jeweiligen Spannungsquelle am ersten Anschluss bereitgestelle Referenzspannung, beispielsweise 5V an. Bei Schaltung zumindest einer der Schalteinheiten der Kommunikationsvorrichtungen in einen (strom-)leitenden Zustand (geschlossene Schalterstellung), fließt dagegen aufgrund der elektrischen Verbindung aller ersten Anschlüsse ein Strom zwischen allen Spannungsquellen und den mit dem Bezugspotential, insbesondere Masse, verbundenen zweiten Anschluss der leitend geschalteten Schalteinheit. Das Schalten der Schalteinheit wird dabei insbesondere mittels der mit deren Steuereingang verbundenen Steuereinheit bewirkt. Die am ersten Anschluss anliegende Spannung (das Spannungsniveau) ist entsprechend, insbesondere im Wesentlichen auf OV, verringert. Dabei entspricht die am ersten Anschluss anliegende Spannung insbesondere der Kollektor-Basis-Spannung bei der als Bipolartransistor ausgebildeten Schalteinheit.

Insbesondere wird hier als "Steuersignal" also der zeitliche Verlauf des stromsperrenden bzw. stromleitenden Zustands des Schaltelments, also der zeitliche Verlauf der Schalterstellung, bezeichnet, wobei je nach Schaltzustand eine entsprechende Spannung am ersten Anschluss der Schalteinheiten Kommunikationsvorrichtungen resultiert bzw. dort eingestellt ist. Mit "Ausgabe des Steuersignals" ist hier das Bewirken des zeitlichen Verlaufs der Spannung am ersten Anschluss der Schalteinheiten der anderen Kommunikationsvorrichtungen entsprechend des zeitlichen Verlaufs der Schalterstellung bezeichnet. Entsprechend ist mit "Empfang des Steuersignals" der entsprechend des zeitlichen Verlaufs der Schalterstellung bewirkte zeitliche Verlauf der Spannung am ersten Anschluss bezeichnet.

Vorteilhaft sind der Schutzvorrichtung vergleichsweise einfach weitere Schutzschalter hinzufügbar. Es ist lediglich eine Kopplung, insbesondere durch eine elektrische Verbindung der ersten Eingänge der Schalteinheiten, zwischen den Kommunikationsvorrichtungen herzustellen und der zugeordnete Teilstrompfad in den Gesamtstrompfad zu schalten. Zudem ist ein elektronischer Schutzschalter der Schutzvorrichtung auch einzeln verwendbar. So ist die Schutzvorrichtung insbesondere modulartig.

Beispielsweise ist die Schalteinheit als ein Halbleiterschalter, insbesondere als ein Bipolartransistor ausgebildet, dessen Basis an die Steuereinheit angeschlossen ist. Als Steuersignal wird insbesondere die am Bipolartransistor abfallende Spannung herangezogen. Beispielsweise ist der Bipolartransistor stromsperrend geschaltet, wobei die Steuereinheit zur Signalausgabe den Bipolartransistor stromleitend schaltet, so dass die über dem Bipolartransistor abfallende Spannung sinkt.

In einer alternativen Weiterbildung ist die Kommunikationsvorrichtung als eine Infrarotbrücke ausgebildet. Insbesondere weist die Kommunikationsvorrichtung hierbei eine Infrarotdiode auf, welche ein beispielsweise frequenzmoduliertes (Lichtsignal) Steuersignal aussendet, wobei die Kommunikationsvorrichtung zum Empfang des Steuersignals einen Infrarotreceiver aufweist. In analoger Weise erfolgt die Kommunikation gemäß einer Weiteren Alternative mittels einer NFC(Near-Field-Communication)-Vorrichtung.

Beispielsweise weist die Steuereinheit zusätzlich eine weitere Schnittstelle, zweckmäßigerweise eine Busschnittstelle (Busanbindung), auf. Mittels der Busanbindung werden weitere, insbesondere den Betriebszustand des elektronischen Schutzschalters repräsentierende, Daten an eine weitere, externe Vorrichtung (Master) übertragen, welche diese Daten beispielsweise zu deren Darstellung für den Benutzer verarbeitet.

Zusätzlich oder alternativ ist beispielsweise mittels dieser Schnittstelle das Steuersignal, wie beispielsweise ein Einschaltsignal oder das Abschaltsignal, insbesondere redundant, von der externen Vorrichtung zuführbar. Allerdings ist eine solche übergeordnete Vorrichtung, welche insbesondere als eine übergeordnete Steuereinheit ausgebildet ist, zur Ausgabe und/oder zum Empfang des Steuersignals nicht notwendig. Vorteilhafterweise erfolgen bei Betrieb der Schutzvorrichtung die Ausgabe und/oder der Empfang des Steuersignals lediglich zwischen den Kommunikationsvorrichtungen der jeweiligen elektronischen Schutzschalter.

Zusätzlich oder alternativ zur Ansteuerung der Schaltelemente in Abhängigkeit des der zugeordneten Steuereinheit zugeführten Steuersignals, ist gemäß einer zweckmäßigen Ausgestaltung jedes Schaltelement in Abhängigkeit des zugeordneten Teilstroms angesteuert.

Zur Ansteuerung in Abhängigkeit des zugeordneten Teilstroms weisen die elektronischen Schutzschalter zweckmäßigerweise jeweils einen Stromsensor auf, welcher insbesondere in Serie zum Schaltelement in den zugeordneten Teilstrompfad geschaltet ist. Insbesondere ist auf diese Weise ein den Teilstrom repräsentierender Ist-Wert des Teilstroms mittels des Stromsensors an die entsprechende Steuereinheit des elektronischen Schutzschalters ausgegeben. Zusammenfassend ist das Schaltelement mittels der Steuereinheit in Abhängigkeit des zugeführten Ist-Wertes und somit in Abhängigkeit des Teilstroms angesteuert. Die Stromstärke des Teilstroms ist mittels des elektronischen Schutzschalters, insbesondere auf die Nennstromstärke des entsprechenden elektronischen Schutzschalters, begrenzt bzw. begrenzbar. Auf diese Weise ist der jeweiligeTeilstrompfad mittels des zugeordneten elektronischen Schutzschalters sperrbar bzw. gesperrt.

Gemäß einer vorteilhaften Ausbildung ist jedes der Schaltelemente als ein Feldeffekttransistor (FET) oder alternativ als ein Bipolartransistor mit integrierter Gate-Elektrode (IGBT) ausgebildet. Des Weiteren weisen in einer alternativen Ausgestaltung derartige Schaltelemente jeweils zwei oder mehrere parallel geschaltete Feldeffekttransistoren oder Bipolartransistoren mit integrierten Gate-Elektroden auf. Allenfalls weisen Feldeffekttransistoren oder Bipolartransistoren mit integrierten Gate-Elektroden einen positiven Temperaturkoeffizienten auf, d.h. mit steigender Temperatur der Feldeffekttransistoren oder der Bipolartransistoren mit integrierten Gate-Elektroden steigt deren elektrischer Widerstand. In Folge dessen und sofern alle elektronischen Schutzschalter gleich ausgebildet sind, weisen im eingeschalteten Zustand der Schutzvorrichtung die Teilströme die gleiche Stromstärke auf. Wäre der Teilstrom, welcher durch einen elektronischen Schutzschalter fließt, größer als die anderen Teilströme, würde sich insbesondere aufgrund der dadurch vergrößerten ohmschen Verluste die Temperatur und somit der elektrische Widerstand des elektronischen Schutzschalter erhöhen, wodurch wiederum der Teilstrom im zugeordneten Teilstrompfad verringert wird. Zusammenfassend liegt bei gleicher Ausbildung aller elektronischen Schutzschalter somit eine im Wesentlichen symmetrische Stromaufteilung in den Teilstrompfaden vor.

Gemäß einer zweckmäßigen Ausgestaltung sind die Lastausgänge der elektronischen Schutzschalter an einen gemeinsamen Stromverteiler, beispielsweise einem Kompaktstromverteiler, angeschlossen. Vorzugsweise werden die Teilstrompfade mittels diesem zusammengeführt. Vorteilhafterweise ist auf diese Weise insbesondere eine Leitungslänge des gemeinsamen Stromverteilers sowie dessen elektrischer Anschluss an den im Betrieb vorgesehenen Verwendungszweck vergleichsweise einfach anpassbar. Zweckmäßigerweise sind die Schutzvorrichtung sowie der Stromverteiler zur Rackmontage oder zur Montage eines im Rack montierten Baugruppenträgers vorgesehen und eingerichtet.

Gemäß dem Verfahren zum Betrieb einer nach einer der oben dargestellten Varianten ausgebildeten Schutzvorrichtung, welche also insbesondere in parallel geschaltete Teilstrompfade eines Gesamtstrompfads geschaltete elektronische Schutzschalter aufweist, wird ein Laststrom, welcher durch den Gesamtstrompfad fließt, in durch die Teilstrompfade fließende Teilströme aufgeteilt. Dabei ist eine Stromstärke des Laststroms größer als ein Schwellenwert eines einzelnen elektronischen Schutzschalters. Weiterhin wird der Lastausgang eines der elektronischen Schutzschalter bei Überschreiten des Schwellenwerts durch den zugeordneten Teilstrom nach Ablauf einer Abschaltzeit abgeschaltet. Hierzu werden die Teilströme mittels der jeweils zugeordneten elektronischen Schutzschalter erfasst. Die Schaltelemente der elektronischen Schutzschalter sind jeweils in Abhängigkeit des erfassten zugeordneten Teilstroms, des Schwellenwerts und/oder eines Steuersignals angesteuert, wobei das Steuersignal jeweils von einem der anderen elektronischen Schutzschalter ausgegeben wird. Insbesondere wird das Schaltelement bei Bedarf, wie beispielsweise im Störfall stromsperrend oder strombegrenzend geschaltet.

Gemäß einer vorteilhaften Weiterbildung wird beim Abschalten der Schutzvorrichtung zunächst der Lastausgang eines elektronischen Schutzschalters abgeschaltet (stromsperrend geschaltet). Dieser elektronische Schutzschalter gibt dabei, mittels dessen Kommunikationsvorrichtung, ein Steuersignal, welches zum Abschalten der Schutzvorrichtung als ein Abschaltsignal ausgebildet ist, an die anderen elektronischen Schutzschalter aus. Aufgrund der stromsperrenden Schaltung dieses Teilstroms, sind die Teilströme der anderen Teilstrompfade bei gleichbleibendem Laststrom gemäß dem ersten Kirchhoffschen Gesetz erhöht. Die Stromstärken dieser Teilströme werden dabei mittels der zugeordneten anderen, noch eingeschalteten, elektronischen Schutzschalter aktiv, insbesondere auf die Nennstromstärke des entsprechenden elektronischen Schutzschalters begrenzt, sofern die Teilströme die entsprechenden Schwellenwerte überschreiten. Insbesondere werden die Teilströme dann jeweils auf den Nennstrom des zugeordneten elektronischen Schutzschalters begrenzt. Das Abschaltsignal wird von den Steuereinheiten der anderen elektronischen Schutzschalter mittels derer Kommunikationsvorrichtungen empfangen, so dass die Lastausgänge der anderen elektronischen Schutzschalter abgeschaltet werden. Dabei werden die Lastausgänge aller anderen elektronischen Schutzschalter, sofern die zugeordneten Teilströme aktiv begrenzt werden, zeitlich vor Ablauf der Abschaltzeit abgeschaltet. Zusammenfassend erfolgt das Abschalten der Lastausgänge der elektronischen Schutzschalter aufgrund des Abschaltsignals schneller als das Abschalten aufgrund einer Überschreitung des Schwellenwertes nach der Abschaltzeit des elektronischen Schutzschalters.

Gemäß einer geeigneten Ausgestaltung wird beim Einschalten der Schutzvorrichtung zunächst ein Lastausgang eines elektronischen Schutzschalters eingeschaltet bzw. stromleitend geschaltet, wobei von diesem elektronischen Schutzschalter, insbesondere mittels dessen Kommunikationsvorrichtung ein als Einschaltsignal ausgebildetes Steuersignal an die anderen elektronischen Schutzschalter, insbesondere an deren Kommunikationsvorrichtungen, ausgegeben wird. Bei zunächst nur einem stromleitend geschalteten elektronischen Schutzschalter fließt der Laststrom lediglich durch diesen elektronischen Schutzschalter, d.h. der Laststrom ist der Teilstrom des entsprechend zugeordneten Teilstrompfads. Dabei wird bei einer Stromstärke des Laststroms, welche größer als der Schwellenwert des zugeordneten elektronischen Schutzschalters ist, dieser Laststrom mittels des elektronischen Schutzschalters, insbesondere auf dessen Nennstromstärke, beschränkt (begrenzt). Die Lastausgänge der anderen elektronischen Schutzschalter werden aufgrund des von diesen empfangenen Einschaltsignals eingeschaltet. Dabei werden die Lastausgänge der anderen elektronischen Schutzschalter vor Ablauf der Abschaltzeit des strombegrenzenden elektronischen Schutzschalters eingeschaltet.

Zusammenfassend erfolgt das Einschalten der Lastausgänge der anderen elektronischen Schutzschalter aufgrund des Einschaltsignals schneller als das Abschalten des strombegrenzend geschalteten elektronischen Schutzschalters nach Ablauf dessen Abschaltzeit aufgrund einer Überschreitung dessen Schwellenwertes. Somit wird der Laststrom auf alle Teilstrompfade aufgeteilt. Infolge dessen wird die Stromstärke des Teilstroms, welcher durch den zunächst strombegrenzend geschalteten elektronischen Schutzschalter fließt, derart verringert (erniedrigt), dass der Schwellenwert dieses elektronischen Schutzschalters nicht weiter überschritten wird und der Lastausgang des elektronischen Schutzschalters somit nicht abgeschaltet wird.

Insbesondere zur korrekten Ansteuerung der Schaltelemente werden gemäß einer zweckmäßigen Weiterbildung das Einschaltsignal und das Abschaltsignal mittels deren zeitlichen Signaldauer unterschieden. Alternativ werden die beiden Steuersignale beispielsweise mittels deren Signalamplitude oder gegebenenfalls anhand einer Frequenz des Steuersignals unterschieden.

Im Kurzschlussfall wird gemäß einer vorteilhaften Weiterbildung der Schwellenwert aller elektronischen Schutzschalter durch die zugeordneten Teilströme überschritten. Die Teilströme werden dann jeweils mittels der elektronischen Schutzschalter begrenzt, bis deren Lastausgänge nach Ablauf der Abschaltzeit abgeschaltet werden. Zusammenfassend wird im Kurzschlussfall der Laststrom zunächst mittels aller elektronischer Schutzschalter, insbesondere auf das der Anzahl der elektronischen Schutzschalter entsprechende Vielfache (n-Fache) der Nennstromstärke eines der elektronischen Schutzschalter, begrenzt und anschließend die Schutzvorrichtung abgeschaltet, wobei kein Steuersignal mittels der Kommunikationsvorrichtung ausgegeben wird.

Im Überlastfall (Überstromfall), d.h. bei andauerndem Überschreiten der Nennstromstärke eines elektronischen Schutzschalters, durch die Stromstärke des entsprechenden Teilstroms, wobei der entsprechende Schwellenwerts allerdings unterschritten bleibt, wird der Lastausgang des entsprechenden elektronischen Schutzschalters nach Ablauf der entsprechend eingestellten (Überwachungszeit)Abschaltzeit oder des Zeitglieds abgeschaltet. In Folge dessen überschreiten aufgrund der Aufteilung des Laststromes auf die Teilstrompfade der nicht abgeschalteten elektronischen Schutzschalter gemäß des ersten Kirchhoffschen Gesetztes deren Teilströme die Schwellenwerte dieser elektronischen Schutzschalter, so dass auch deren Lastausgänge abgeschaltet werden. In analoger Weise zum oben dargestellten Verfahren zum Abschalten der Schutzvorrichtung wird dabei vom zunächst sperrend geschalteten elektronischen Schutzschalter ein Signal, welches vorzugsweise zum Ein- und Abschaltsignal unterscheidbar ist, zum Abschalten der Schutzvorrichtung mittels dessen Kommunikationsvorrichtung an die anderen elektronischen Schutzschalter ausgegeben. Auf diese Weise wird das Abschalten der Schutzvorrichtung aufgrund eines Überstroms dem Benutzer korrekt dargestellt.

Nachfolgend werden Ausführungsbeispiele der Erfindung anhand einer Zeichnung näher erläutert. Darin zeigen:
- Fig. 1: in einem Blockschaltbild die Schutzvorrichtung mit einem Gesamtstrompfad, welcher parallel geschaltete Teilstrompfade aufweist, wobei in jedem der Teilstrompfade ein elektronischer Schutzschalter mit einem Schaltelement und mit einer Steuereinheit sowie mit einer Kommunikationsvorrichtung geschaltet ist,
- Fig. 2: die miteinander gekoppelten Kommunikationsvorrichtungen der elektronischen Schutzschalter in einem hinsichtlich der Kopplung vergleichsweise detaillierten Blockschaltbild,
- Fig. 3: in einem Flussdiagramm einen Verfahrensablauf beim Abschalten der Schutzvorrichtung, wobei zunächst der Lastausgang eines der elektronischen Schutzschalter abgeschaltet wird,
- Fig. 4: schematisch in einem mit Fig. 3 korrespondierenden Strom-Zeit-Diagramm den zeitlichen Verlauf eines Laststroms beim Abschalten der Schutzvorrichtung,
- Fig. 5: in einem Flussdiagramm einen Verfahrensablauf beim Einschalten der Schutzvorrichtung, wobei zunächst der Lastausgang eines der elektronischen Schutzschalter eingeschaltet wird,
- Fig. 6: schematisch in einem mit Fig. 5 korrespondierenden Strom-Zeit-Diagramm den zeitlichen Verlauf des Laststroms beim Einschalten der Schutzvorrichtung,
- Fig. 7: in einem Flussdiagramm einen Verfahrensablauf zum Abschalten der Schutzvorrichtung im Kurzschlussfall, wobei zunächst alle elektronischen Schutzschalter strombegrenzend geschaltet werden, und
- Fig. 8: schematisch in einem mit Fig. 7 korrespondierenden Strom-Zeit-Diagramm den zeitlichen Verlauf des Laststroms im Kurzschlussfall.

Einander entsprechende Teile sind in allen Figuren mit den gleichen Bezugszeichen versehen.

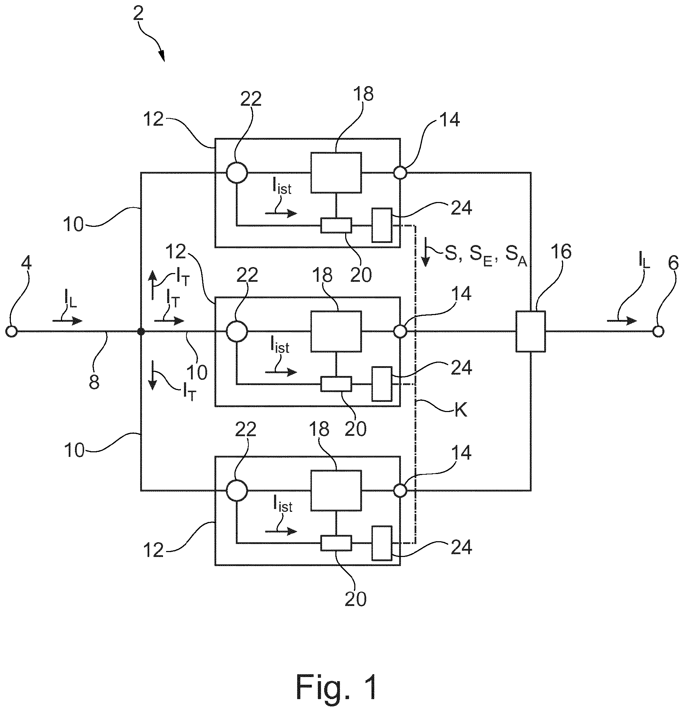

In Fig.1 ist eine Schutzvorrichtung 2 mit einem Spannungseingang 4 zum Anschließen an ein nicht weiter dargestelltes Stromverteilungssystem oder an eine Konstantstromquelle sowie mit einem Lastanschluss 6 zum Anschließen einer nicht weiter dargestellten Last gezeigt. Ein zwischen dem Spannungseingang 4 und dem Lastanschluss 6 verlaufender Gesamtstrompfad 8 weist mehrere zueinander parallel geschaltete Teilstrompfade 10 auf. Ein im Gesamtstrompfad 8 fließender Laststrom I_{L} ist somit in die durch die Teilstrompfade 10 fließenden Teilströme I_{T} aufgeteilt. In jedem der Teilstrompfade 10 ist dabei jeweils ein elektronischer Schutzschalter 12 geschaltet. Jeder der elektronischen Schutzschalter 12 weist lastanschlussseitig einen Lastausgang 14 auf, wobei die Lastausgänge 14 der elektronischen Schutzschalter 12 an einen gemeinsamen Stromverteiler 16 angeschlossen sind, mittels welchem die Teilstrompfade 10 zusammengefasst und mit dem Lastanschluss 6 verbunden sind, d.h. die Lastausgänge 14 der elektronischen Schutzschalter 12 sind an den diesen gemeinsamen Stromverteiler 16 angeschlossen.

Ferner weisen die elektronischen Schutzschalter 12 jeweils ein Schaltelement 18 sowie eine das Schaltelement 18 steuernde Steuereinheit 20 auf. Das Schaltelement 18 ist hier als ein Feldeffekttransistor (FET) ausgeführt. Mittels des Schaltelements 18 ist der durch den zugeordneten Teilstrompfad 10 fließender Teilstrom I_{T} aktiv, d.h. gesteuert oder geregelt, strombegrenzt und strombegrenzbar. Zudem ist der Lastausgang 14 des entsprechenden elektronischen Schutzschalters 12 mittels des Schaltelements 18 einschaltbar und abschaltbar, d.h. das Schaltelement 18 ist vollständig aufgesteuert, also stromleitend, bzw. stromsperrend geschaltet. Die elektronischen Schutzschalter 12 weisen hierzu einen Schwellenwert I_{S} auf. Bei Überschreiten dieses Wertes durch den zugeordneten Teilstrom I_{T} wird dieser Teilstrom I_{T} zunächst begrenzt, insbesondere auf den eine Nennstromstärke I_{Nenn} des zugeordneten elektronischen Schutzschalters 12. Anschließend wird der zugeordneten elektronischen Schutzschalters 12 nach Ablauf einer Abschaltzeit abgeschaltet, sofern der Schwellenwert während dieser Zeitdauer überschritten bleibt.

Gemäß einer nicht weiter dargestellten Alternative ist jeweils zwischen der Steuereinheit 20 und dem entsprechenden Schaltelement 18 der Schutzvorrichtung eine weitere Schaltung, insbesondere eine Analogschaltung, geschaltet. Mit anderen Worten ist die Steuereinheit 20 indirekt (mittelbar) an das Schaltelement 18 angeschlossen.

In der Ausführung gemäß der Fig. 1 sind die elektronischen Schutzschalter 12 der Schutzvorrichtung 2 baugleich ausgeführt, wobei diese insbesondere die gleiche Nennstromstärke I_{Nenn} aufweisen.

In die Teilstrompfade 10 ist zu den Schaltelementen 18 jeweils ein Stromsensor 22 in Serie geschaltet. Mittels des Stromsensors 22 des elektronischen Schutzschalters 12 wird der Teilstrom I_{T} als ein Ist-Wert Iᵢₛₜ erfasst und der Steuereinheit 20 zugeführt. Hierzu ist der Stromsensor 22 an die Steuereinheit 20 angeschlossen. Des Weiteren weisen die elektronischen Schutzschalter 12 jeweils eine Kommunikationsvorrichtung 24 auf. Diese ist ebenfalls an die Steuereinheit 20 des entsprechenden elektronischen Schutzschalters 12 angeschlossen. Die Kommunikationsvorrichtung 24 dient dabei dem Empfang sowie dem Senden eines Steuersignals S, wobei die Kommunikationsvorrichtungen 24 der elektronischen Schutzschalter 12 miteinander gekoppelt sind (Kopplung K). Auf diese Weise ist das Steuersignal S eines elektrischen Schutzschalters 12 allen anderen elektronischen Schutzschaltern 12 zuführbar, bzw. ist auf diese Weise das Steuersignal S eines anderen der elektronischen Schutzschalters 12 empfangbar.

Zusammenfassend sind die Schaltelemente 18 in Abhängigkeit des zugeordneten Teilstroms I_{T} und/oder eines der zugeordneten Steuereinheit 20 zugeführten Steuersignals S angesteuert.

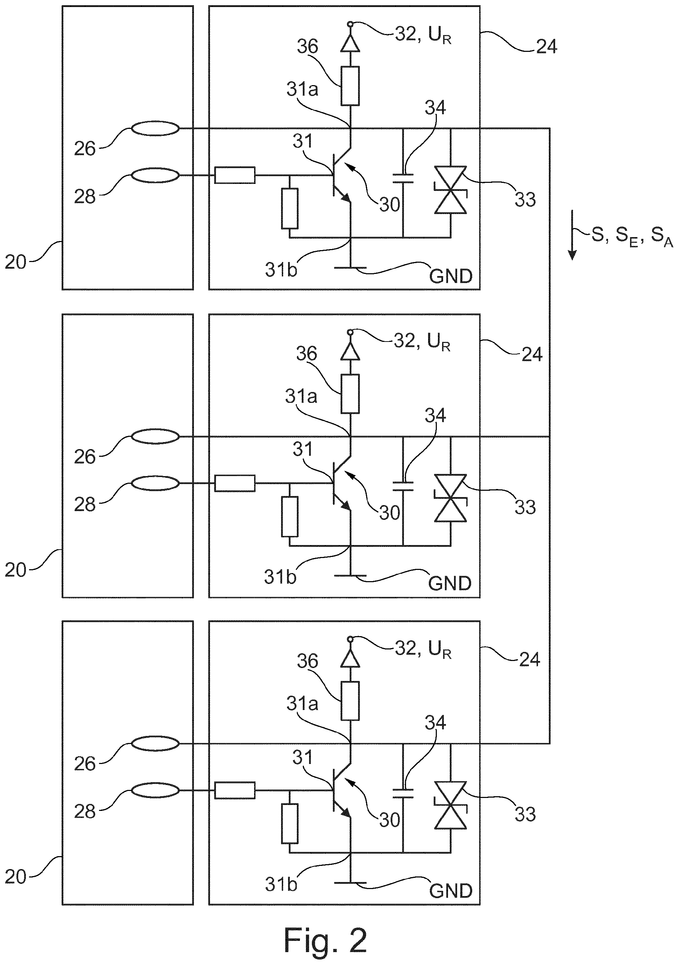

Fig. 2 stellt die Kopplung K der Kommunikationsvorrichtungen 24 der elektronischen Schutzschalter 12 vergleichsweise detailliert dar. Die Kommunikationsvorrichtungen 24 sind jeweils an einen Eingang 26 sowie an einen Ausgang 28 der Steuereinheit 20 angeschlossen. Der Ausgang 28 der Steuereinheit 20 ist dabei an eine Schalteinheit 30 angeschlossen, welcher hier als ein npn-Transistor ausgebildet ist. Der Ausgang 28 ist an den Steuereingang 31 der Schalteinheit 30, hier dessen Basis, geführt, so dass mittels der Steuereinheit 20 eine elektrische Leitfähigkeit der Schalteinheit 30 einstellbar ist und auch eingestellt wird. Die als npn-Transistor ausgebildete Schalteinheit 30 weist weiterhin einen kollektorseitigen ersten Anschluss 31a sowie einen emitterseitigen zweiten Anschluss 31b auf. Dabei sind die ersten Anschlüsse 31a der Schalteinheiten 30 mit einer jeweiligen Spannungsquelle 32 der Kommunikationsvorrichtung 24 zum Bereitstellen einer Referenzspannung U_{R} elektrisch verbunden. An den zweiten Ausschlüsse 31a der Schalteinheit 30 liegt ein Bezugspotential GND, hier Masse, an.

Des Weiteren sind die ersten Anschlüsse 31a aller Schalteinheiten 30 miteinander elektrisch verbunden. Die Kopplung K ist hier also als ein elektrischer Leiter ausgebildet. Die elektrische Verbindung der ersten Anschlüsse 31a ist also vorzugsweise direkt (unmittelbar). Dabei ist jeweils der erste Anschluss 31a der Schalteinheit 30 mit dem Eingang 26 der zugeordneten Steuereinheit 20 verbunden.

Sind die Schalteinheiten 30 stromsperrend geschaltet (geöffnete Schalterstellung) liegt an allen ersten Anschlüssen 31 a die mittels der jeweiligen Spannungsquelle 32 am ersten Anschluss 31a bereitgestelle Referenzspannung U_{R}, beispielsweise 5V an. Bei Schaltung zumindest einer der Schalteinheiten 30 der Kommunikationsvorrichtungen 24 in einen (strom-)leitenden Zustand, fließt dagegen aufgrund der elektrischen Verbindung aller ersten Anschlüsse 31a ein Strom zwischen allen Spannungsquellen 32 und den mit dem Bezugspotential GND verbundenen zweiten Anschluss 31b der leitend geschalteten Schalteinheit 30. Aufgrund dessen ist die am ersten Anschluss 31a anliegende Spannung, welche hier der Kollektor-Basis-Spannung der Schalteinheit 30 entspricht im Wesentlichen auf 0V verringert. Dabei entspricht die am ersten Anschluss 31a.

Hierbei wird als "Steuersignal S" der zeitliche Verlauf des stromsperrenden bzw. stromleitenden Zustands des Schaltelements 30, also der zeitliche Verlauf der Schalterstellung, bezeichnet, wobei je nach Schaltzustand des Schaltelements 30 eine entsprechende Spannung am ersten Anschluss 31a der Schalteinheiten 30 der anderen Kommunikationsvorrichtungen 24 resultiert bzw. dort eingestellt ist. Ebenfalls ist in analoger Weise die Spannung am ersten Anschluss 31a der schaltenden Schalteinheit 30 eingestellt. Zusammenfassend ist somit das mittels der Kopplung K übertragene Steuersignal S an die Eingänge 26 der entsprechenden Steuereinheiten 20 geführt.

Zwischen dem ersten Eingang 31a der Schalteinheit 30 und der jeweils zugeordneten Spannungsquelle 32 ist ein Widerstand 36 geschaltet. Dieser fungiert insbesondere als ein sogenannter "Pull-up-Widerstand".

Mittels der Steuereinheit 20 ist die Schalteinheit 30 derart ansteuerbar, dass sich ein als Abschaltsignal S_{A} ausgebildetes Steuersignal S von einem als Einschaltsignal S_{E} ausgebildetem Steuersignal S in deren zeitlichen Dauer (Zeitdauer) oder deren zeitlichen Abfolge unterscheiden. Beispielsweise wird die das Steuersignal ausgebende Schalteinheit 30 der entsprechenden Kommunikationsvorrichtung 24 für eine vorgegebene Zeitdauer leitend geschaltet, wobei sich das Abschaltsignal und das Einschaltsignal in der Zeitdauer unterscheiden, und/oder die Schalteinheit wird mehrmals hintereinander leitend geschaltet, wobei sich das Abschaltsignal und das Einschaltsignal in der Anzahl der Schaltungen unterscheiden. Hierzu wird die Schalteinheit 30 für die entsprechende Dauer leitend geschaltet. Zusammenfassend ist das Steuersignal S mittels einer Schalterstellung der Schalteinheit 30 bestimmt.

Zusätzlich ist jeweils zur Schalteinheit 30 ein Schutzelement 33 parallel geschaltet, welche die Schalteinheit 30 vor einer Beschädigung durch eine Spannungsspitze schützt. Gemäß der Ausführung der Fig. 2 ist das Schutzelement 33 als eine Suppressordiode ausgebildet. Zusätzlich ist der Schalteinheit 30 ein Kondensator 34 parallel geschaltet, welcher insbesondere zur Entstörung des Steuersignals S und zur Dämpfung auftretender gegebenenfalls auftretender Störungen dient.

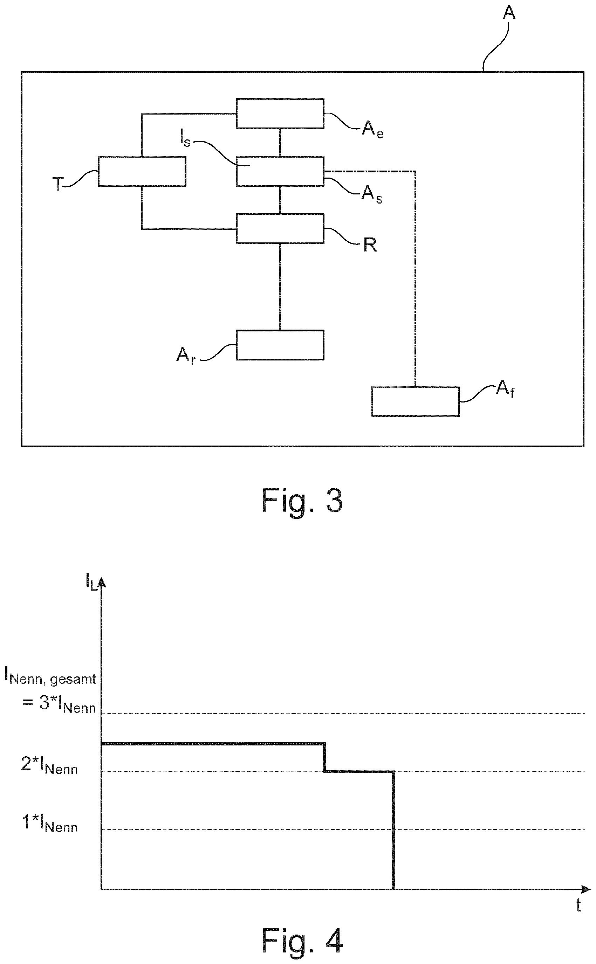

Die Figuren 3 und 5 sowie 7 stellen das Verfahren zum Betrieb der Schutzvorrichtung 2, welche gemäß Fig. 1 ausgebildet ist und somit insgesamt drei elektronische Schutzschalter 12 aufweist, beim Abschalten A, beim Einschalten E sowie beim Abschalten KF im Kurzschlussfall in einem Flussdiagramm schematisch dar. Die Figuren Fig. 4 und 6 sowie 8 zeigen in einem hierzu korrespondierendem Strom-Zeit-Diagramm den zeitlichen Verlauf des Laststroms I_{L}. Hierbei stellen die gestrichelt dargestellten Linien jeweils ein n-faches der Nennstromstärke I_{Nenn} eines elektronischen Schutzschalters 12 dar. Dabei weisen alle elektronischen Schutzschalter 12 die gleiche Nennstromstärke I_{Nenn} auf, wobei diese jeweils als diejenige Stromstärke herangezogen wird, auf welche der zugeordnete Teilstrom I_{T} begrenzt wird. Bei parallel geschalteten Schutzschaltern ergibt sich die Nennstromstärke I_{Nenn, gesamt} als die Summe der Nennstromstärken I_{Nenn} der einzelnen elektronischen Schutzschalter 12, also dem 3-fachen von I_{Nenn}.

Des Weiteren weist der Laststrom I_{L} gemäß den Figuren 3 bis 8 im Normalbetrieb, d.h. bei vollständig eingeschalteter Schutzvorrichtung, eine Stromstärke zwischen dem 2-fachen und dem 3-fachen der Nennstromstärke I_{Nenn} eines der elektronischen Schutzschalter 12 auf, ist also größer als der Schwellenwert eines einzelnen elektronischen Schutzschalters 12. Jedoch ist die Schutzvorrichtung 2 auch bei geringeren Lastströmen I_{L} verwendbar. Das im Folgenden dargelegte Betriebsverfahren ist dort in analoger Weise anwendbar, wobei dann beim Einschalten und Abschalten der Schutzvorrichtung 2 keiner der Teilströme I_{T} den Schwellenwert I_{S} eines der elektronischen Schutzschalters 12 überschreitet und die Teilströme I_{T} nicht beschränkt (begrenzt) werden.

Das Abschalten A der Schutzvorrichtung 2 ist in Fig. 3 und Fig. 4 dargestellt. In einem ersten Schritt Aₑ wird der Lastausgang 14 eines ersten elektronischen Schutzschalters 12 abgeschaltet (stromsperrend geschaltet). Dabei wird das Abschaltsignal S_{A} an die anderen elektronischen Schutzschalter 12 ausgesendet und übertragen (Übertragung T). Aufgrund der stromsperrenden Schaltung Aₑ des ersten elektronischen Schutzschalters 12 übersteigen die Teilströme I_{T} der anderen Teilstrompfade 10 die Schwellenwerte I_{S} der zugeordneten elektronischen Schutzschalter zumindest vergleichsweise kurzfristig, weswegen die anderen elektronischen Schutzschalter 12 aufgrund dessen strombeschränkend geschaltet (strombegrenzende Schaltung Aₛ) werden, so dass die Teilströme I_{T} der nicht stromgesperrten Teilstrompfade 10 die Nennstromstärke I_{Nenn} der zugeordneten elektronischen Schutzschalter 12 nicht überschreiten. In Folge dessen ist der Laststrom I_{L} auf das 2-fache des Nennstroms I_{Nenn} eines der elektronischen Schutzschalter beschränkt. Weiter empfangen die anderen elektronischen Schutzschalter 12, insbesondere deren Steuervorrichtungen 20 mittels deren Kommunikationsvorrichtungen 24, das vom zunächst stromsperrend geschalteten elektronischen Schutzschalter 12 ausgesendete Abschaltsignal S_{A} (Empfang R), weshalb eine stromsperrende Schaltung Aᵣ der anderen elektronischen Schutzschalter 12 folgt. Derart ist die Schutzvorrichtung 2 abgeschaltet. Mit anderen Worten fließt kein Laststrom I_{L}.

Sofern die anderen elektronischen Schutzschalter 12 vor dem Ablauf der Abschaltzeit kein Ausschaltsignal empfangen, werden diese aufgrund des Überschreitens deren Schwellenwerts I_{S} durch den Teilstrom I_{T} nach Ablauf der Abschaltzeit abgeschaltet, was im Flussdiagramm der Fig. 3 als strichpunktierter Flusspfad dargestellt ist. Auf diese Weise wird der Lastanschluss 6 auch bei einem Fehlverhalten oder einem Ausfall der Kommunikationsvorrichtungen 24 abgeschaltet A_{f}.

Zusammenfassend ist die Zeitdauer zwischen dem stromsperrenden Schalten Aₑ des ersten elektronischen Schutzschalters 12 und dem Abschalten Aᵣ der anderen elektronischen Schutzschalter 12 aufgrund des Abschaltsignals S_{A} geringer als die Abschaltzeit der anderen elektronischen Schutzschalter. Beispielsweise beträgt diese Zeitdauer 6 ms, während die Abschaltzeit 10 ms betragen würde.

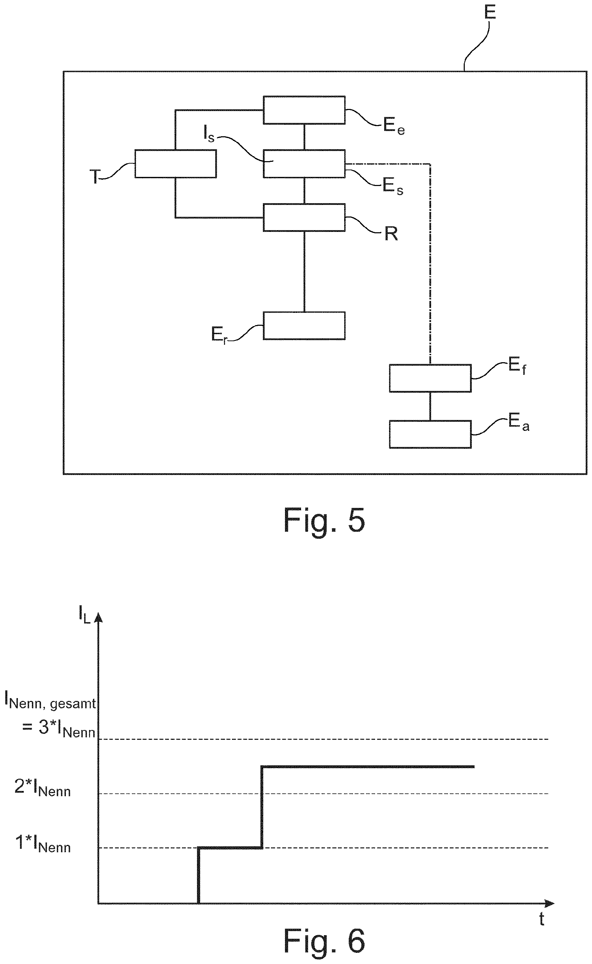

In den Figuren 5 und 6 ist ein das Verfahren beim Einschalten E der Schutzvorrichtung 2 darstellendes Flussdiagramm bzw. ein dazu korrespondierendes Strom-Zeit-Diagramm des Laststroms I_{L} dargestellt. Beim Einschalten E wird in einem ersten Schritt Eₑ zunächst der Lastausgang 14 eines der elektronischen Schutzschalter 12 eingeschaltet, während die anderen elektronischen Schutzschalter 12 zunächst stromsperrend geschaltet bleiben. Dieser eingeschaltete elektronische Schutzschalter 12 gibt das Einschaltsignal S_{E} an die anderen elektronischen Schutzschalter 12 aus (Übertragung T). Hierbei fließt der Laststrom I_{L} also lediglich durch den Teilstrompfad 10 mit dem eingeschalteten elektronischen Schutzschalter12, d.h. der zugeordnete Teilstrom I_{T} ist gleich dem Laststrom I_{L}, so dass der Schwellenwert I_{S} der zugeordneten elektronischen Schutzschalter 12 durch den Teilstrom I_{T} zumindest vergleichsweise kurzfristig überschritten wird. Infolge dessen wird dieser elektronische Schutzschalter 12 strombegrenzend geschaltet und der Laststrom I_{L} im Verfahrensschritt Eₛ auf den Nennstrom I_{Nenn} begrenzt. Die anderen elektronischen Schutzschalter 12 empfangen das vom strombegrenzend geschalteten elektronischen Schutzschalter 12 ausgegebene Einschaltsignal S_{E} (Empfang R). Folglich werden die Lastausgänge 14 der anderen elektronischen Schutzschalter 12 angeschaltet (Anschalten Eᵣ). Zusammenfassend sind die Lastausgänge 14 aller elektronischen Schutzschalter 12 angeschaltet. Der zum Betrieb der Last vorgesehene Laststrom I_{L} wird auf diese Weise auf alle Teilstrompfade 10 aufgeteilt, so dass der durch den zuerst angeschalteten elektronischen Schutzschalter 12 fließende Teilstrom I_{T} den Schwellenwert I_{S} dieses elektronischen Schutzschalters 12 nicht weiter überschreitet. Die Zeitdauer zwischen der strombegrenzenden Schaltung Eₛ des zuerst angeschalteten elektronischen Schutzschalter 12 und dem Einschalten Eᵣ der anderen elektronischen Schutzschalter 12 ist dabei kürzer als die Abschaltzeit des zunächst strombegrenzend geschalteten elektronischen Schutzschalters 12.

Sofern die anderen elektronischen Schutzschalter 12 vor dem Ablauf der Abschaltzeit kein Einschaltsignal empfangen, beispielsweise aufgrund eines Defekts der Kommunikationsvorrichtung 24 des zuerst eingeschalteten elektronischen Schutzschalters 12, wird dieser erste Schutzschalters 12 aufgrund des Überschreitens deren Schwellenwerts I_{S} durch den Teilstrom I_{T} nach Ablauf der Abschaltzeit abgeschaltet (Verfahrensschritt E_{f}), was im Flussdiagramm der Fig. 3 als strichpunktierter Flusspfad dargestellt ist. Werden die anderen elektronischen Schutzschalter dann (verspätet) zugeschaltet, übersteigen die Teilströme I_{T} die entsprechenden Schwellenwerte I_{S} der zugeordneten elektronischen Schutzschalter 12, so dass diese folglich nach Ablauf deren Abschaltzeit abgeschaltet werden. Auf diese Weise werden die Lastausgänge aller elektronischen Schutzschalter 12 abgeschaltet, somit auch der Lastanschluss 6, was als Verfahrensschritt Eₐ bezeichnet ist. Somit wird die Last nicht mit dem Laststrom I_{L} versorgt, bleibt jedoch auch vor einem anderen Störfall geschützt.

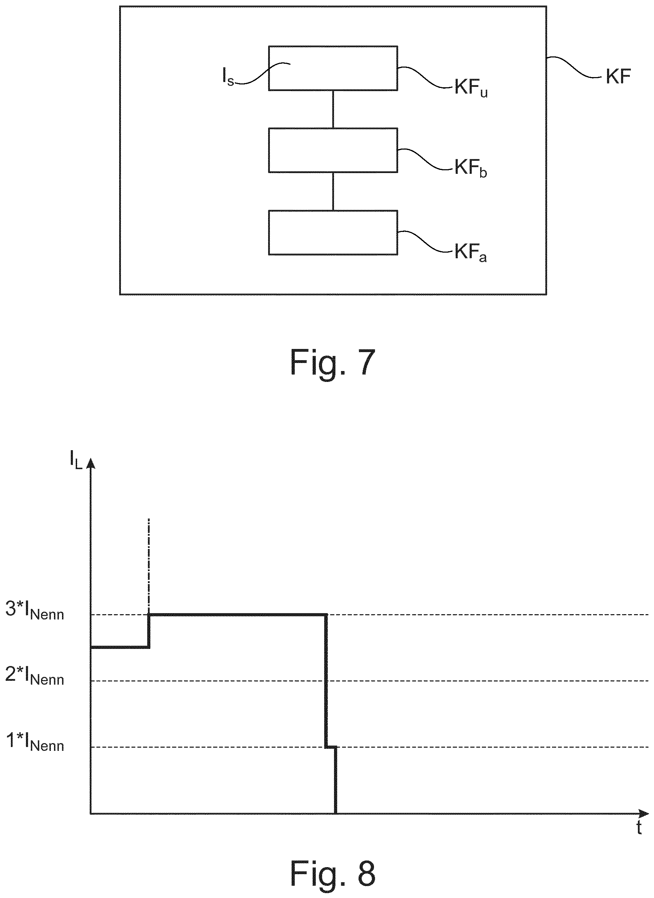

Die Figuren 7 und 8 stellen das Abschalten KF der Schutzvorrichtung 2 im Kurzschlussfall dar. Im Kurzschlussfall tritt zunächst ein vergleichsweise hoher Laststrom I_{L} auf, was in Fig. 8 strichpunktiert als eine Stromspitze angedeutet ist. Dabei sind die Teilströme I_{T} derart hoch, dass die Schwellenwerte I_{S} aller elektronischen Schutzschalter 12 überschritten werden, was im Folgenden als Kᵤ bezeichnet wird. Bei andauernden Überschreiten der Schwellenwerte I_{S} durch die jeweiligen Teilströme I_{T} werden die Lastausgänge 14 aller elektronischen Schutzschalter 12 nach deren Abschaltzeit abgeschaltet (KFₐ), wobei die elektronischen Schutzschalter 12 bis zum Abschalten KFₐ deren Lastausgänge 14 den jeweils zugeordneten Teilstrom I_{T} auf deren Nennstrom I_{Nenn} begrenzen (KF_{b}). Der Laststrom I_{L} ist auf diese Weise während der strombegrenzenden Schaltung KF_{b} der elektronischen Schutzschalter 12 auf eine Gesamtnennstromstärke I_{Nenn, gesamt} der Schutzvorrichtung 2, nämlich dem 3-fache der Nennstromstärke I_{Nenn} eines einzelnen elektronischen Schutzschalters 12, begrenzt.

Wie in Fig. 8 gezeigt ist, kann ein Schwellenwert I_{S} eines der elektronischen Schutzschalter 12 überschritten werden, vergleichsweise kurz nachdem die Schwellenwerte I_{S} der anderen elektronischen Schutzschalter 12 bereits überschritten wurden, so dass dieser elektronischen Schutzschalter 12 abschaltet, vergleichsweise kurz nachdem die anderen elektronischen Schutzschalter 12 bereits abgeschaltet sind. Beispielsweise ist dies der Fall bei einer zu den anderen Schutzschaltern 12 unterschiedlichen Temperatur dieses elektronischen Schutzschalters 12, so dass dessen Widerstand größer ist und der durch den zugeordneten Teilstrompfad 10 fließende Teilstrom I_{T} kleiner ist als die anderen Teilströme. In Folge dessen wird der Schwellenwert I_{S} dieses elektronischen Schutzschalters 12 erst vergleichsweise kurze Zeit später überschritten. Die Schutzfunktion der Schutzvorrichtung 2 bleibt dabei trotzdem erhalten.

Zusammenfassen ist das Abschalten (Auslösen) eines der elektronischen Schutzschalter 12 im Kurzschlussfall unabhängig von der Kopplung K mittels der Kommunikationsvorrichtungen 24, d.h. es werden keine Steuersignale S bzw. Abschaltsignale S_{A} ausgegeben. Die Schutzfunktion der Schutzvorrichtung 2 bleibt also erhalten.

Die elektronischen Schutzschalter 12 sind des Weiteren derart ausgebildet, dass diese abschalten, sofern deren Temperatur einen Temperaturschwellenwert überschreitet und sofern an diesen eine vergleichsweise hohe oder niedrige Spannung anliegt. Somit sind die Last sowie der entsprechende elektronische Schutzschalter 12 vor einer Beschädigung geschützt.

Die Erfindung ist nicht auf das vorstehend beschriebene Ausführungsbeispiel beschränkt. Vielmehr können auch andere Varianten der Erfindung vom Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung zu verlassen.

### Bezugszeichenliste

- 2: Schutzvorrichtung
- 4: Spannungseingang
- 6: Lastanschluss
- 8: Gesamtstrompfad
- 10: Teilstrompfad
- 12: elektronischer Schutzschalter
- 14: Lastausgang
- 16: Stromverteiler
- 18: Schaltelement
- 20: Steuereinheit
- 22: Stromsensor
- 24: Kommunikationsvorrichtung
- 26: Eingang der Steuereinheit
- 28: Ausgang der Steuereinheit
- 30: Schalteinheit
- 31: Steuereingang der Schalteinheit
- 31a: erster Anschluss der Schalteinheit
- 31b: zweiter Anschluss der Schalteinheit
- 32: Spannungsquelle
- 33: Schutzelement
- 34: Kondensator
- 36: Widerstand

- A: Abschalten der Schutzvorrichtung
- Aₑ: Abschalten des Lastausgangs eines ersten elektronischen Schutzschalters
- A_{f}: Abschalten bei Fehlverhalten der Schutzvorrichtung
- Aᵣ: Abschalten der Lastausgänge der anderen elektronischen Schutzschalter
- Aₛ: strombegrenzende Schaltung der anderen elektronischen Schutzschalter
- E: Einschalten der Schutzvorrichtung
- Eₐ: Abschalten aller Lastausgänge
- Eₑ: Einschalten des Lastausgangs eines ersten elektronischen Schutzschalters
- E_{f}: Abschalten bei Fehlverhalten der Schutzvorrichtung
- Eᵣ: Einschalten der Lastausgänge der anderen elektronischen Schutzschalter
- Eₛ: strombegrenzende Schaltung es ersten elektronischen Schutzschalters
- Iᵢₛₜ: Ist-Wert
- I_{L}: Laststrom
- I_{Nenn}: Nennstromstärke eines elektronischen Schutzschalters
- I_{Nenn, gesamt}: Nennstromstärke der Schutzvorrichtung
- I_{S}: Schwellenwert
- I_{T}: Teilstrom
- K: Kopplung der Kommunikationsvorrichtungen
- KF: Abschalten der Schutzvorrichtung im Kurzschlussfall
- KFₐ: Abschalten der Lastausgänge aller elektronsicher Schutzschalter
- KF_{b}: strombegrenzende Schaltung aller elektronischen Schutzschalter
- KFᵤ: Überschreiten der Schwellenwerte aller elektronischer Schutzschalter
- R: Empfang des Steuersignals
- S: Steuersignal
- S_{E}: Einschaltsignal
- S_{A}: Ausschaltsignal
- T: Übertragung des Steuersignals
- U_{R}: Referenzspannung

## Patentansprüche

1. Schutzvorrichtung (2), aufweisend einen Gesamtstrompfad (8) zwischen einem Spannungseingang (4) und einem Lastanschluss (6), mit einer Anzahl an parallel geschalteten Teilstrompfaden (10),
- wobei in jedem Teilstrompfad (10) ein elektronischer Schutzschalter (12) mit einem Schaltelement (18) und mit einer Steuereinheit (20) zur aktiven Strombegrenzung eines im Teilstrompfad (10) fließenden Teilstroms (I_{T}) sowie zum Einschalten und Abschalten eines Lastausgangs (14) des elektronischen Schutzschalters (12) geschaltet ist,
- wobei jeder der elektronischen Schutzschalter (12) eine Kommunikationsvorrichtung (24) zum Empfang und zur Ausgabe eines Steuersignals (S) aufweist, **dadurch gekennzeichnet, dass**
- die Kommunikationsvorrichtungen (24) derart miteinander gekoppelt sind, dass das von einer der Kommunikationsvorrichtungen (24) ausgegebene Steuersignal (S) parallel an die jeweils anderen Kommunikationsvorrichtungen (24) ausgegeben ist bzw. wird.

2. Schutzvorrichtung (2) nach Anspruch 1,
- wobei die Kommunikationsvorrichtungen (24) jeweils eine als Halbleiterschalter ausgebildete Schalteinheit (30) aufweisen, deren Steuereingang (31) mit einem Ausgang (28) der zugeordneten Steuereinheit (20) verbunden ist, wobei das Steuersignal (S) mittels einer Schalterstellung der Schalteinheit (30) bestimmt ist,
- wobei die Schalteinheiten (30) jeweils einen ersten Anschluss (31a), welcher mit einer Spannungsquelle (32) verbunden ist, und einen zweiten Anschluss (31b), an welchem ein Bezugspotential (GND) anliegt, aufweisen,
- wobei die ersten Anschlüsse (31a) aller Schalteinheiten (30) miteinander verbunden sind, und
- wobei jeweils der erste Anschluss (31a) der Schalteinheit (30) mit einem Eingang (26) der zugeordneten Steuereinheit (20) verbunden ist.

3. Schutzvorrichtung (2) nach Anspruch 1 oder 2,
**dadurch gekennzeichnet,**
**dass** jedes Schaltelement (18) in Abhängigkeit des zugeordneten Teilstroms (I_{T}) und/oder des der zugeordneten Steuereinheit (20) zugeführten Steuersignals (S) angesteuert ist.

4. Schutzvorrichtung (2) nach einem der Ansprüche 1 bis 3,
**dadurch gekennzeichnet,**
**dass** jedes der Schaltelemente (18) ein Feldeffekttransistor (FET) oder ein Bipolartransistor mit integrierter Gate-Elektrode (IGBT) ist.

5. Schutzvorrichtung (2) nach einem der Ansprüche 1 bis 4,
**dadurch gekennzeichnet,**
**dass** die Lastausgänge (14) der elektronischen Schutzschalter (12) an einen gemeinsamen Stromverteiler (16) angeschlossen sind.

6. Verfahren zum Betrieb einer Schutzvorrichtung (2) nach einem der Ansprüche 1 bis 5,
- wobei ein durch den Gesamtstrompfad (8) fließender Laststrom (I_{L}) mit einer Stromstärke, welche größer ist als ein Schwellenwert (I_{S}) eines einzelnen elektronischen Schutzschalters (12), in durch die Teilstrompfade (10) fließende Teilströme (I_{T}) aufgeteilt wird,
- wobei der Lastausgang (14) eines der elektronischen Schutzschalter (12) bei Überschreiten des Schwellenwerts (I_{S}) durch den zugeordneten Teilstrom (I_{T}) nach Ablauf einer Abschaltzeit abgeschaltet wird,
- wobei die Teilströme (I_{T}) mittels der jeweils zugeordneten elektronischen Schutzschalter (12) erfasst werden, und
- wobei die Schaltelemente (18) der elektronischen Schutzschalter (12) jeweils in Abhängigkeit des erfassten zugeordneten Teilstromes (I_{T}), des vorgegebenen Schwellenwerts (I_{S}) und/oder eines Steuersignals (S,S_{E},S_{A}) angesteuert werden, welches von einem anderen elektronischen Schutzschalter (12) ausgegeben wird.

7. Verfahren nach Anspruch 6,
**dadurch gekennzeichnet,**
**dass** beim Abschalten der Schutzvorrichtung (2) zunächst der Lastausgang (14) eines der elektronischen Schutzschalter (12) stromsperrend geschaltet und von diesem elektronischen Schutzschalter (12) ein als Abschaltsignal (S_{A}) ausgebildetes Steuersignal (S) an die anderen elektronischen Schutzschalter (12) der Schutzvorrichtung (2)ausgegeben wird,
- wobei die den Schwellenwert (I_{S}) überschreitenden Teilströme (I_{T}) der zugeordneten Teilstrompfade (10) mittels der anderen elektronischen Schutzschalter (12) begrenzt werden, bis die Lastausgänge (14) der anderen elektronischen Schutzschalter (12) aufgrund des Steuersignals (S,S_{A}) abgeschaltet werden, und
- wobei die Lastausgänge (14) der strombegrenzenden elektronischen Schutzschalter (12) aufgrund des zugeführten Steuersignals (S,S_{A}) vor dem Ablauf der Abschaltzeit abgeschaltet werden.

8. Verfahren nach Anspruch 6 oder 7,
**dadurch gekennzeichnet,**
**dass** beim Einschalten der Schutzvorrichtung (2) zunächst der Lastausgang (14) eines der elektronischen Schutzschalter (12) eingeschaltet und von diesem elektronischen Schutzschalter (12) ein als Einschaltsignal (S_{E}) ausgebildetes Steuersignal (S) an die anderen elektronischen Schutzschalter (12) der Schutzvorrichtung (2) ausgegeben wird,
- wobei dieser elektronische Schutzschalter (12) den Schwellenwert (I_{S}) überschreitenden Teilstrom (I_{T}) des zugeordneten Teilstrompfads (10) begrenzt, bis die Lastausgänge (14) der anderen elektronischen Schutzschalter (12) aufgrund des Steuersignals (S,S_{E}) eingeschaltet werden, und
- wobei die Lastausgänge (14) der anderen elektronischen Schutzschalter (12) aufgrund des zugeführten Steuersignals (S,S_{E}) vor dem Ablauf der Abschaltzeit des strombegrenzenden elektronischen Schutzschalters (12) eingeschaltet werden.

9. Verfahren nach Anspruch 8,
**dadurch gekennzeichnet,**
**dass** das Einschaltsignal (S_{E}) und das Abschaltsignal (S_{A}) mittels deren zeitlichen Signaldauer unterschieden werden.

10. Verfahren nach einem der Ansprüche 6 bis 9,
**dadurch gekennzeichnet,**
**dass** im Kurzschlussfall zunächst die den Schwellenwert (I_{S}) überschreitenden Teilströme (I_{T}) mittels der zugeordneten elektronischen Schutzschalter (12) begrenzt werden, bis die Lastausgänge (14) der elektronischen Schutzschalter (12) nach dem Ablauf der Abschaltzeit abgeschaltet werden.

## Claims

1. Protection device (2), having a total current path (8) between a voltage input (4) and a load terminal (6), with a number of parallel-connected partial current paths (10),
- wherein in each partial current path (10) an electronic circuit breaker (12) with a switching element (18) and with a control unit (20) for active current limitation of a partial stream (I_{T}) flowing in the partial current path (10) and for switching on and switching off a load output (14) of the electronic circuit breaker (12) is connected,
- wherein each of the electronic circuit breakers (12) has a communication device (24) for receiving and outputting a control signal (S),
**characterized in that**
the communication devices (24) are coupled to one another in such a way that the control signal (S) output by one of the communication devices (24) is or will be output to the other communication devices (24) in parallel.

2. Protection device (2) according to Claim 1,
- wherein the communication devices (24) each have a switching unit (30) designed as a semiconductor switch, the control input of which (31) being connected to an output (28) of the associated control unit (20), wherein the control signal (S) is determined by means of a switch position of the switching unit (30).
- wherein the switching units (30) each have a first terminal (31a), which is connected to a voltage source (32), and a second terminal (31b), to which a reference potential (GND) is applied,
- wherein the first terminals (31a) of all switching units (30) are connected to one another, and
- wherein the first terminal (31a) of the switching unit (30) is connected to an input (26) of the associated control unit (20).

3. Protection device (2) according to Claim 1 or 2,
**characterized in that**
that each switching element (18) is controlled depending on the associated partial stream (I_{T}) and/or that of the control signal (S) fed to the associated control unit (20).

4. Protection device (2) according to one of Claims 1 to 3,
**characterized in**
**that** each of the switching elements (18) is a field effect transistor (FET) or a bipolar transistor with an integrated gate electrode (IGBT).

5. Protection device (2) according to one of Claims 1 to 4,
**characterized in**
**that** the load outputs (14) of the electronic circuit breakers (12) are connected to a common power distributor (16).

6. Method of operating a protective device (2) according to one of the Claims 1 to 5,
- wherein a load current (I_{L}) flowing through the total current path (8) with a current which is greater than a threshold value (I_{S}) of an individual electronic circuit breaker (12), is divided into partial streams (I_{T}) flowing through the partial current paths (10),
- wherein the load output (14) of one of the electronic circuit breakers (12) is switched off after a switch-off time when the threshold (I_{S}) is exceeded by the associated partial stream (I_{T}),
- wherein the partial streams (I_{T}) are detected by means of the respectively associated electronic circuit breakers (12), and
- wherein the switching elements (18) of the electronic circuit breakers (12) each can be controlled depending on the detected associated partial stream (I_{T}), the predetermined threshold value (I_{S}) and/or a control signal (S,S_{E},S_{A}), said control signal being output by another electronic circuit breaker (12).

7. Method according to Claim 6,
**characterized in**
**that** when the protective device (2) is switched off, the load output (14) of one of the electronic circuit breakers (12) is connected in a current-blocking manner first and a control signal (S) designed as a switch-off signal (S_{A}) is output from said electronic circuit breaker (12) to the other electronic circuit breakers (12) of the protective device (2),
- wherein the partial streams (I_{T}) of the associated partial current paths (10) exceeding the threshold value (I_{S}) are limited by means of the other electronic circuit breakers (12) until the load outputs (14) of the other electronic circuit breakers (12) are switched off due to the control signal (S,S_{A}), and
- wherein the load outputs (14) of the current-limiting electronic circuit breakers (12) are switched off before the end of the switch-off time based on to the control signal (S,S_{A}) supplied.

8. Method according to Claim 6 or 7,
**characterized in**
**that** when the protective device (2) is switched on, the load output (14) of one of the electronic circuit breakers (12) is first switched on and by said electronic circuit breaker (12) a control signal (S) designed as a switch-on signal (S_{E}) is output to the other electronic circuit breakers (12) of the protective device (2),
- wherein said electronic circuit breaker (12) limits the partial stream (I_{T}) exceeding the threshold value (I_{S}) of the associated partial current path (10) until the load outputs (14) of the other electronic circuit breakers (12) are switched on due to the control signal (S,S_{E}), and
- wherein the load outputs (14) of the other electronic circuit breakers (12) are switched on based on the control signal (S,S_{E}) supplied before the switch-off time of the current-limiting electronic circuit breaker (12) has elapsed.

9. Method according to Claim 8,
**characterized in**
**that** the switch-on signal (S_{E}) and the switch-off signal (S_{A}) can be distinguished by means of their temporal signal duration.

10. Method according to any one of Claims 6 to 9,
**characterized in**
**that** in the event of a short circuit, first the partial streams (I_{T}) exceeding the threshold values (I_{S}) are limited by means of the associated electronic circuit breakers (12) until the load outputs (14) of the electronic circuit breakers (12) are switched off after the switch-off time has elapsed.

## Revendications

1. Dispositif de protection (2), ayant un trajet de courant total (8) entre une entrée de tension (4) et une connexion de charge (6), avec un nombre des trajets de courant partiels parallèles (10),
- dans lequel un disjoncteur électronique (12) est connecté dans chaque trajet de courant partiel (10) avec un élément de commutation (18) et avec une unité de commande (20) pour la limitation de courant d'un courant partiel (I_{T}) circulant dans le trajet de courant partiel (10) et pour activer et désactiver une sortie de charge (14) du disjoncteur électronique (12),
- dans lequel chacun des disjoncteurs électroniques (12) possède un dispositif de communication (24) pour recevoir et émettre un signal de commande (S),
**caractérisé en ce que**
les dispositifs de communication (24) sont couplés les uns aux autres de telle sorte que le signal de commande (S) émis par l'un des dispositifs de communication (24) soit ou sera délivré aux autres dispositifs de communication (24) parallèlement.

2. Dispositif de protection (2) selon la revendication 1,
- dans lequel les dispositifs de communication (24) ont chacun une unité de commutation (30) conçue comme un commutateur semi-conducteur, dont l'entrée de commande (31) est connectée à une sortie (28) de l'unité de commande associée (20), le signal de commande (S) étant déterminé au moyen d'une position de commutation de l'unité de commutation (30),
- dans lequel les unités de commutation (30) ont chacune une première connexion (31a), qui est connectée à une source de tension (32), et une deuxième connexion (31b), à laquelle un potentiel de référence (GND) est présent,
- dans lequel les premières connexions (31a) de toutes les unités de commutation (30) sont connectées entre elles, et
- dans lequel la première connexion (31a) de l'unité de commutation (30) est connectée avec une entrée (26) de l'unité de commande associée (20).

3. Dispositif de protection (2) selon la revendication 1 ou 2,
**caractérisé en ce**
**que** chaque élément de commutation (18) est commandé en fonction du courant partiel (I_{T}) attribué et/ou en fonction du signal de commande (S) amené à l'unité de contrôle (20) associée.

4. Dispositif de protection (2) selon l'une des revendications 1 à 3,
**caractérisé en ce**
**que** chacun des éléments de commutation (18) est un transistor à effet de champ (FET) ou un transistor bipolaire avec une électrode de grille intégrée (IGBT).

5. Dispositif de protection (2) selon l'une des revendications 1 à 4,
**caractérisé en ce**
**que** les sorties de charge (14) des disjoncteurs électroniques (12) sont connectées à un distributeur de courant commun (16).

6. Procédé de fonctionnement d'un dispositif de protection (2) selon l'une des revendications 1 à 5,
- dans lequel un courant de charge (I_{L}) traversant le trajet de courant total (8), avec un courant qui est supérieur à une valeur de seuil (I_{S}) d'un disjoncteur électronique (12) individuel, est divisé en courants partiels (I_{T}) traversant les trajets de courant partiels (10),
- dans lequel la sortie de charge (14) de l'un des disjoncteurs électroniques (12) est coupée après l'écoulement d'un temps de coupure si la valeur seuil (I_{S}) est dépassée par le courant partiel (I_{T}) associé,
- dans lequel les courants partiels (I_{T}) sont détectés au moyen des disjoncteurs électroniques (12) associés, et
- dans lequel les éléments de commutation (18) des disjoncteurs électroniques (12) chacun sont commandés en fonction du courant partiel attribué (I_{T}) détecté de la valeur de seuil prédéterminée (I_{S}) et/ou d'un signal de commande (S,S_{E},S_{A}) qui est émis par un autre disjoncteur électronique (12).

7. Procédé selon la revendication 6,
**caractérisé en ce**
**que**, lors de la déconnexion du dispositif de protection (2), d'abord la sortie de charge (14) de l'un des disjoncteurs électroniques (12) est désactivé limitant le courant et à partir dudit disjoncteur électronique (12) un signal de commande (S) conçu comme signal d'arrêt (S_{A}) est délivré aux autres disjoncteurs électroniques (12) du dispositif de protection (2),
- dans lequel les courants partiels (I_{T}) des trajets de courant partiels associés (10) dépassant la valeur seuil (I_{S}) sont limités au moyen des autres disjoncteurs électroniques (12) jusqu'à ce que les sorties de charge (14) des autres disjoncteurs électroniques (12) soient désactivées sur la base du signal de commande (S,S_{A}), et
- dans lequel les sorties de charge (14) des disjoncteurs électroniques (12) limitant le courant sont coupées avant l'expiration du temps de coupure en raison du signal de commande (S,S_{A}) fourni.

8. Procédé selon la revendication 6 ou 7,
**caractérisé en ce**
**que**, lors de la mise en marche du dispositif de protection (2), la sortie de charge (14) de l'un des disjoncteurs électroniques (12) est d'abord enclenchée et qu'à partir dudit disjoncteur électronique (12) un signal de commande (S) conçu comme un signal d'activation (S_{E}) soit émis aux autres disjoncteurs électroniques (12) du dispositif de protection (2),
- dans lequel ledit disjoncteur électronique (12) limite le courant partiel (IT) dépassant la valeur seuil (I_{S}) du trajet de courant partiel assigné (10) jusqu'à ce que les sorties de charge (14) des autres disjoncteurs électroniques (12) soient activées en raison du signal de commande (S,S_{E}), et
- dans lequel les sorties de charge (14) des autres disjoncteurs électroniques (12) sont activées sur la base du signal de commande (S,S_{E}) fourni avant l'expiration du temps de coupure du disjoncteur électronique (12) limitant le courant.

9. Procédé selon la revendication 8,
**caractérisé en ce**
**que** le signal de mise en marche (S_{E}) et le signal de coupure (S_{A}) sont distingués au moyen de leur durée temporelle.

10. Procédé selon l'une quelconque des revendications 6 à 9,
**caractérisé en ce**
**qu'**en cas de court-circuit, les courants partiels (I_{T}) dépassant les seuils (I_{S}) sont limités au moyen des disjoncteurs électroniques (12) associés jusqu'à ce que les sorties de charge (14) des disjoncteurs électroniques (12) soient désactivées après l'expiration du temps de coupure.
